# EUROPÄISCHE PATENTANMELDUNG

(11) **EP 0 635 308 A1**
(43) Veröffentlichungstag der Anmeldung: **25.01.1995**
(21) Anmeldenummer: 94110500.9
(22) Anmeldetag: 06.07.1994
(51) Int. Cl.: B03B 9/06, B29B 17/02

(54) **Verfahren und Vorrichtung zur Aufbereitung von Formkörpern aus unterschiedlichen Polymeren**

(30) Priorität: 20.07.1993 DE 4324237
(71) Anmelder: METALLGESELLSCHAFT AG, D-60323 Frankfurt am Main (DE)
(72) Erfinder: Kirsch, Stephan, D-61118 Bad Vilbel (DE); Pötzschke, Manfred, Dr., D-61476 Kronberg (DE)

(57) **Zusammenfassung**

Es wird ein Verfahren und eine Vorrichtung zur Aufbereitung von Formkörpern aus unterschiedlichen Polymeren beschrieben.

Bei diesem Verfahren werden die Formkörper durch eine Prall- und/oder Schlagbeanspruchung zerkleinert oder zerkleinert und dabei aufgeschlossen, und die Partikeln werden nach der Zerkleinerung entsprechend ihrer Größe und/oder Form durch ein Klassierverfahren getrennt. Die Vorrichtung zur Durchführung dieses Verfahrens besteht aus hintereinander angeordneter Prallmühle (2) und Linearschwingsieb oder Taumelsieb (8).

## Beschreibung

Die Erfindung bezieht sich auf ein Verfahren und eine Vorrichtung zur Aufbereitung von Formkörpern aus unterschiedlichen Polymeren.

Das Recycling sortenreiner Polymerabfälle hat heute technologisch und wirtschaftlich einen beachtlich hohen Stand erreicht. Probleme bereiten jedoch Polymerabfälle, die nicht aus nur einer der vielen verschiedenen Polymersorten bestehen. Es wurden Verfahren entwickelt, Gemische verschiedener Polymere mechanisch voneinander zu trennen. Dazu eignen sich z.B. Technologien, welche die unterschiedliche Dichte der Polymerarten nutzen. Polyolefine haben z.B. eine Dichte von unter 1 g/cm³, während PVC eine Dichte von etwa 1,4 g/cm³ aufweist. Da sich die Dichte beim Aufschwimmen der Polymere im Wasser bemerkbar macht, werden zur Trennung der Polymere Schwimm-Sink-Verfahren verwendet, wobei gewöhnlich Hydrozyklone eingesetzt werden. Allerdings müssen die Polymerabfälle vorher zerkleinert und gewaschen werden. Ein Problem dieser Verfahren besteht darin, daß der Wasch- und Trocknungsprozeß sehr aufwendig ist. Obendrein muß das Waschwasser aufbereitet und der Schlamm entsorgt werden (Helmut Mylenbusch, "Zum Stand des Kunststoff-Recycling", Seite 221 bis 230 in Recycling von Abfällen 1, K.J. Thomé-Kozmiensky (Hrsg.), EF-Verlag für Energie- und Umwelttechnik GmbH, München 1989). Ein weiterer Nachteil dieser nassen Dichte-Sortierung mit Hilfe von Schwimm-Sink-Verfahren besteht darin, daß sie nur für eine Sortierung bis zu einer Dichtedifferenz von größer als 0,02 g/cm³ gut geeignet sind (Walter Michaeli und Muna Bittner, "Materielles Recycling thermoplastischer Kunststoffabfälle", Chem.-Ing.-Tech, 64, 1992, Seite 422 - 429). Zudem ist die Einstellung und Kontrolle der Dichtestufe der Trennflüssigkeit sehr aufwendig. Eine Sortierung dichteähnlicher oder dichtegleicher Polymere, wie z.B. Polystyrol (PS) mit einer Dichte von 1,05 g/cm³ und Acrylnitril/Polybutadien/Styrol (ABS) mit einer Dichte von 1,04 bis 1,06 g/cm³ oder wie Polymethylmethacrylat (PMMA) mit einer Dichte von 1,17 g/cm³ bis 1,20 g/cm³ und Polycarbonat (PC) mit einer Dichte von 1,20 g/cm³, mit diesen Sortierverfahren ist nicht möglich. Vollends unmöglich ist die Trennung bei Verbundmaterialien, seien es Verbunde verschiedener Polymere oder Polymer-Textil- oder Polymer-Metall-Verbunde. Ein ganz besonderes Problem stellen die Polymere im Automobilbau dar. (Helmut Mylenbusch, "Zum Stand des Kunststoff-Recycling", Seite 221 bis 230 in Recycling von Abfällen 1, K.J. Thomé-Kozmiensky (Hrsg.), EF-Verlag für Energie- und Umwelttechnik GmbH, 1989).

Der Erfindung liegt daher die Aufgabe zugrunde, ein Verfahren zu schaffen, das die Nachteile der nassen Dichte-Sortierung vermeidet und eine optimale Trennung von verschiedenen Polymersorten in verschiedene Fraktionen mit einem Wertstoffgehalt von größer 50 % ermöglicht und das zudem wirtschaftlich ist.

Die Aufgabe wird dadurch gelöst, daß die Formkörper durch eine Prall- und/oder Schlagbeanspruchung bei Normaltemperatur zerkleinert oder zerkleinert und dabei aufgeschlossen werden und daß die Partikeln nach der Zerkleinerung entsprechend ihrer Größe und/oder Form durch ein Klassierverfahren getrennt werden. Die Formkörper können sowohl in einem Gemisch vorliegen, das aus Formkörpern unterschiedlicher Polymere besteht, als auch selbst aus unterschiedlichen Polymeren bestehen, die miteinander verbunden sind. Die Formkörper können noch Verunreinigungen enthalten. Das bedeutet, sie können weitere Bestandteile, zum Beispiel Dichtungen, metallische Befestigungsmittel wie Schrauben und Muttern oder elektronische Bauteile und Kabel, enthalten. Diese sogenannten Verunreinigungen stellen ebenfalls Wertstoffe dar und können weiter verwendet werden. Die Zerkleinerung oder die Zerkleinerung und der Aufschluß kann im allgemeinen in einer Mühle oder einem Brecher erfolgen. Als Mühlen können zum Beispiel Prallmühlen oder Hammermühlen verwendet werden und als Brecher können beispielsweise Hammerbrecher, Prallbrecher oder Prallhammerbrecher eingesetzt werden. Durch diese Art der Zerkleinerung und Trennung durch ein Klassierverfahren entstehen verschiedene Fraktionen, die zum überwiegenden Teil aus einem bestimmten Polymer bestehen, denn das Aufschließen und die Zerkleinerung erfolgen selektiv, was bedeutet, daß unter gleichen Zerkleinerungsbedingungen bestimmte Polymere in spezifische Korngrößen oder Kornformen zerkleinert werden. Die Form und die Größe der Bruchstücke ist dabei von der Struktur und von den unterschiedlichen Festigkeits- und Zähigkeitseigenschaften, insbesondere Schlag- und Kerbschlagzähigkeit, der verschiedenen Polymerarten abhängig. Unter dem Begriff "Zerkleinerung" ist eine Verminderung der Korngröße zu verstehen. Der Begriff "Zerkleinerung und Aufschließen" bedeutet, daß die Verbindung der unterschiedlichen Polymere der Formkörper, die selbst aus unterschiedlichen und miteinander verbundenen Polymeren bestehen, während der Zerkleinerung ganz oder teilweise gelöst wird oder daß die Verbindung zwischen Verunreinigung und Polymer ganz oder teilweise gelöst wird.

Der Vorteil des erfindungsgemäßen Verfahrens besteht hauptsächlich darin, daß der Gebrauch von Flüssigkeiten, der nach dem Stand der Technik in Form von Waschwasser oder Trennflüssigkeit für die nassen Dichte-Trennverfahren zwingend notwendig ist, vermieden wird. Damit ist eine Möglichkeit geschaffen, das Recycling gemischter Polymer-Abfälle mit einem umweltfreundlichen Verfahren ohne schadstoffbelastete Abwässer durchzuführen. Das Verfahren arbeitet zudem noch sehr wirtschaftlich, denn der Verfahrensschritt einer Zerkleinerung ist üblicherweise schon Bestandteil der Aufbereitung von Polymer-Abfällen zur Herstellung neuer Polymer-Produkte. Selbst dichteähnliche oder dichtegleiche Polymere lassen sich mit dem erfindungsgemäßen Verfahren trennen, sofern sie unterschiedliche Festigkeits- und Zähigkeitseigenschaften aufweisen. So lassen sich beispielsweise
Polystyrol (PS)
(Dichte = 1,05 g/cm³, Kerbschlagzähigkeit = 2-2,5 kJ/m²)
von Acrylnitril/Polybutadien/Styrol (ABS)
(Dichte = 1,04-1,06 g/cm³,
Kerbschlagzähigkeit = 7-20 kJ/m²)
oder Polymethylmethacrylat (PMMA)
(Dichte = 1,17-1,20 g/cm³, Kerbschlagzähigkeit = 2 kJ/m²)
von Polycarbonat (PC)
(Dichte = 1,2 g/cm³, Kerbschlagzähigkeit = 20-30 kJ/m²) trennen.

Gemäß einer bevorzugten Ausgestaltung der Erfindung erfolgt die Zerkleinerung in einer Prallmühle oder Hammermühle. Die Anzahl und der Abstand von Schlagleiste und Prallplatte sowie die Rotorumfangsgeschwindigkeit in der Prallmühle und die Spaltweiten des Siebrostes sowie die Rotorumfangsgeschwindigkeit der Hammermühle werden entsprechend der aufgegebenen Formkörper eingestellt. Die optimalen Parameter lassen sich durch wenige einfache Versuche ermitteln. Die Verwendung der Prallmühle oder Hammermühle gewährleistet eine besonders gute selektive Zerkleinerung verschiedener Polymere.

In weiterer bevorzugter Ausgestaltung der Erfindung ist vorgesehen, daß nach der Zerkleinerung vor der Trennung durch ein Klassierverfahren eine Magnetabscheidung und eine Siebung mit einem Stangensieb oder einem Spannwellensieb erfolgt, wobei das mit Hilfe der zusätzlichen Siebvorrichtung abgetrennte Grobgut der Prallmühle oder Hammermühle erneut zugeführt wird. Dadurch können Verunreinigungen, beispielsweise Gummi-Dichtungen oder metallische, ferromagnetische Befestigungsmittel, von den Polymer-Partikeln abgetrennt werden.

In weiterer bevorzugter Ausgestaltung der Erfindung ist vorgesehen, daß die Trennung mit einem Siebverfahren erfolgt. Als Siebe können zum Beispiel Lochbleche, Drahtgewebe oder Spaltsiebe verwendet werden. Die Siebe können in Siebvorrichtungen beispielsweise als Linearschwingsieb oder Taumelsieb eingesetzt werden.

In weiterer bevorzugter Ausgestaltung der Erfindung ist es vorgesehen, daß durch das Klassierverfahren eine gröbere Fraktion und eine feinere Fraktion gewonnen werden, wobei zumindest die feinere Fraktion eine für die Weiterverarbeitung geeignete Korngröße aufweist. Diese Fraktion kann zum Beispiel direkt als Polymer-Granulat zur Herstellung neuer Polymer-Produkte verwendet werden.

In weiterer Ausgestaltung der Erfindung ist vorgesehen, daß der Schnitt zwischen gröberer und feinerer Fraktion im Bereich zwischen 1 bis 10 mm liegt. Das bedeutet, daß die Klassierung auf einen konstanten Siebschnitt erfolgt, wobei der Schnitt innerhalb eines Bereiches zwischen 1 bis 10 mm liegt.

In weiterer bevorzugter Ausgestaltung der Erfindung ist vorgesehen, daß nach der Trennung eine trockene Herdsortierung oder eine Wirbelstromsortierung erfolgt. Die trockene Herdsortierung kann zum Beispiel mit einem Luftherd erfolgen, wobei durch einen geneigten, in Längsrichtung beweglichen Herdtisch und durch das Einblasen von Luft von unten eine Schwergut-Leichtgut-Sortierung durchgeführt wird und durch eine Absaugvorrichtung gleichzeiutig eine Feinstkorn-Fraktion abgetrennt wird. Unter Wirbelstromsortierung ist eine Trennung zwischen elektrisch leitenden und nicht-leitenden Partikeln unter Ausnutzung unterschiedlicher Ablenkung während einer Bewegung dieser Partikeln durch ein Magnetfeld zu verstehen. Mit einer trockenen Herdsortierung oder einer Wirbelstromsortierung können in vorteilhafter Weise Metallpartikeln abgetrennt werden.

Gemäß einer weiteren bevorzugten Ausführungsform der Erfindung werden die Partikeln nach der Trennung einer nassen Dichte-Sortierung oder einer elektrostatischen Scheidung unterzogen. Damit wird der Reinheitsgrad der Polymer-Granulate weiter erhöht.

In weiterer Ausgestaltung der Erfindung ist es vorgesehen, daß die Partikeln der gröberen Fraktion durch eine Prall- und/oder Schlagbeanspruchung bei Normaltemperatur weiter zerkleinert oder weiter zerkleinert und dabei aufgeschlossen werden und daß die Partikeln nach der weiteren Zerkleinerung entsprechend ihrer Größe und/oder Form durch ein Klassierverfahren getrennt werden.

In weiterer Ausgestaltung der Erfindung ist es vorgesehen, daß die weitere Zerkleinerung in einer Prallmühle oder Hammermühle erfolgt.

In weiterer Ausgestaltung der Erfindung ist es vorgesehen, daß die Trennung nach der weiteren Zerkleinerung mit einem Siebverfahren erfolgt und daß dabei eine gröbere und eine feinere Fraktion gewonnen werden, wobei die gröbere Fraktion der Prallmühle oder Hammermühle erneut zugeführt wird. Als Siebe können beispielsweise Linearschwingsiebe, Taumelsiebe oder Spannwellensiebe eingesetzt werden.

In weiterer Ausgestaltung der Erfindung ist es vorgesehen, daß der Schnitt zwischen gröberer und feinerer Fraktion der weiter zerkleinerten Partikeln im Bereich zwischen 50 bis 200 mm liegt. Das bedeutet, daß die Klassierung auf einen konstanten Siebschnitt erfolgt, der innerhalb eines Bereiches zwischen 50 bis 200 mm liegen kann.

In weiterer Ausgestaltung der Erfindung ist es vorgesehen, daß nach der weiteren Zerkleinerung vor der Trennung eine Magnetabscheidung erfolgt.

In weiterer Ausgestaltung der Erfindung ist es vorgesehen, daß nach der Trennung eine trockene Herdsortierung oder eine Wirbelstromsortierung erfolgt.

In weiterer Ausgestaltung der Erfindung ist es vorgesehen, daß die Partikeln der feineren Fraktion in einer Naßschneidmühle weiter zerkleinert werden, bis die Partikeln eine für die Weiterverarbeitung geeignete Korngröße aufweisen.

In weiterer Ausgestaltung der Erfindung ist es vorgesehen, daß die Partikeln der feineren Fraktion einer Schwimm-Sink-Anlage zugeführt werden, worin in Wasser aufschwimmende Bestandteile abgetrennt werden.

In weiterer Ausgestaltung der Erfindung ist es vorgesehen, daß die absinkenden Partikeln der feineren Fraktion getrocknet werden. Mit absinkenden Partikeln sind die Partikeln der feineren Fraktion gemeint, die in einer Schwimm-Sink-Anlage nicht in Wasser aufschwimmen.

In weiterer Ausgestaltung der Erfindung ist es vorgesehen, daß die Partikeln der feineren Fraktion einer nassen Dichte-Sortierung oder einer elektrostatischen Scheidung unterzogen werden. Damit wird der Reinheitsgrad der Polymer-Granulate weiter erhöht.

Das erfindungsgemäße Verfahren wird in einer Vorrichtung durchgeführt, die aus einer Prallmühle oder Hammermühle und einem Linearschwingsieb oder Taumelsieb besteht, die hintereinander angeordnet sind und wodurch eine gröbere und eine feinere Fraktion gewonnen werden. Durch diese Vorrichtung entstehen verschiedene Fraktionen, die zum überwiegenden Teil aus einer bestimmten Polymerart bestehen. Dabei kann die feinere Fraktion eine Korngröße aufweisen, welche für eine Weiterverarbeitung direkt geeignet ist, beispielsweise zur Verwendung als Polymer-Granulat zur Herstellung neuer Polymer-Produkte.

Nach einer weiteren Ausgestaltung der Erfindung besteht die Vorrichtung aus einer zusätzlichen Magnetabscheidevorrichtung und einer zusätzlichen Siebvorrichtung mit in Reihen angeordneten und einseitig gehaltenen Siebstäben oder einem Spannwellensieb, die zwischen der Prallmühle oder Hammermühle und dem Linearschwingsieb oder Taumelsieb angeordnet sind, wobei das mit Hilfe der zusätzlichen Siebvorrichtung oder dem Spannwellensieb abgetrennte Grobgut der Prallmühle oder Hammermühle mit einer Transportvorrichtung erneut zugeführt wird. Dadurch läßt sich das Haufwerk in die verschiedenen Fraktionen bestimmter Polymerarten und in weitere Fraktionen wie zum Beispiel Gummiring-Dichtungen oder metallische Befestigungsmittel, beispielsweise Schrauben und Muttern, oder Kabel trennen.

Nach einer weiteren Ausgestaltung der Erfindung hat die Vorrichtung einen zusätzlichen Luftherd, der nach dem Linearschwingsieb oder Taumelsieb angeordnet ist und worin die feinere Fraktion aufgegeben wird. Dadurch lassen sich in vorteilhafter Weise Staub und Schwergut von den Polymer-Partikeln trennen.

Nach einer weiteren Ausgestaltung der Erfindung besteht die Vorrichtung aus einer weiteren Prallmühle oder Hammermühle und einem weiteren Linearschwingsieb, Taumelsieb oder Spannwellensieb, die hintereinander angeordnet sind und worin die gröbere Fraktion aufgegeben wird.

Nach einer weiteren Ausgestaltung der Erfindung hat die Vorrichtung eine zusätzliche Magnetahscheidevorrichtung, die zwischen der Prallmühle oder Hammermühle und dem Linearschwingsieb, Taumelsieb oder Spannwellensieb angeordnet ist, wobei das mit Hilfe des Linearschwingsiebs, Taumelsiebs oder Spannwellensiebs abgetrennte Grobgut der Prallmühle oder Hammermühle mit einer Transportvorrichtung erneut zugeführt wird.

Nach einer weiteren Ausgestaltung der Erfindung hat die Vorrichtung einen zusätzlichen Luftherd und eine Naßschneidemühle, die hintereinander geschaltet sind und die nach dem Linearschwingsieb, Taumelsieb oder Spannwellensieb angeordnet sind.

Nach einer weiteren Ausgestaltung der Erfindung hat die Vorrichtung eine zusätzliche Schwimm-Sink-Anlage und eine Zentrifuge, die hintereinander geschaltet sind und die nach dem Linearschwingsieb, Taumelsieb oder Spannwellensieb oder nach der Naßschneidemühle angeordnet sind. Damit kann der Wertstoffgehalt des Polymer-Granulats weiter erhöht werden.

Das erfindungsgemäße Verfahren wird nachfolgend beispielhaft anhand einer Zeichnung näher beschrieben.

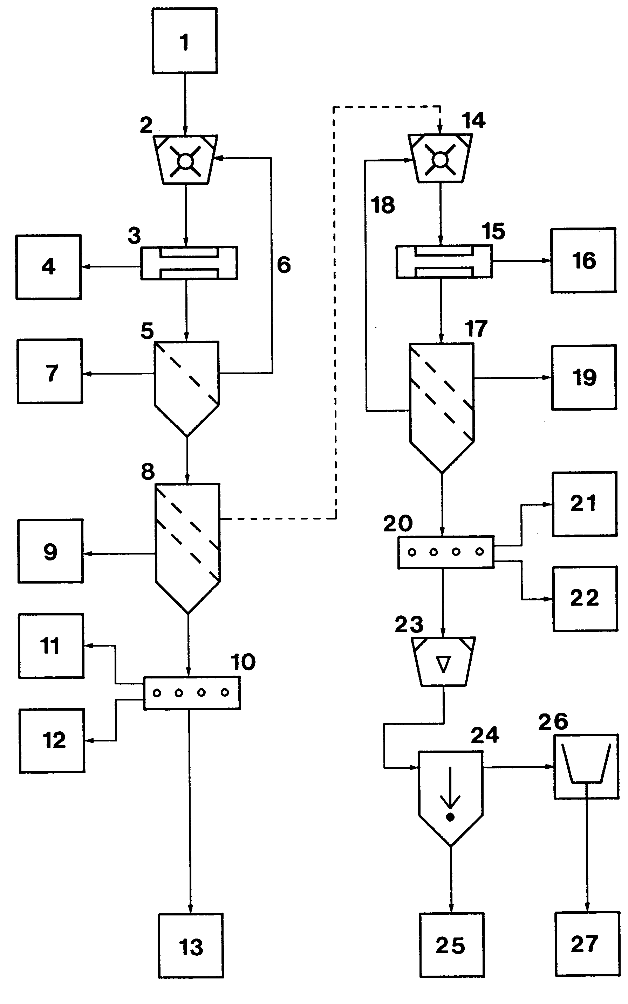

In der Zeichnung ist beispielhaft ein Flußdiagramm des erfindungsgemäßen Aufbereitungsverfahrens dargestellt, wobei das Aufgabegut - im Beispiel Heck- und Blinkleuchten aus PKW's, zusammengesetzt aus Acrylnitryl/Polybutadien/Styrol (ABS), Polymethylmethacrylat (PMMA) sowie Polycarbonat (PC) - in einer Prall- oder Hammermühle (2) selektiv zerkleinert wird. Die unterschiedlichen mechanischen Eigenschaften der verschiedenen Polymere werden dabei genutzt, um diese in polymerspezifische Korngrößenklassen zu zerkleinern.

Das Aufgabegut wird aus dem Vorratsbehälter (1) in die Prallmühle (2) aufgegeben. Die Prallmühle (2) besteht im Mühleninnenraum aus einem Rotor mit Schlagleisten sowie aus zwei Prallplatten. Zwischen Schlagleisten und Prallplatten werden für den Zerkleinerungsvorgang Spaltweiten von 20 bis 130 mm eingestellt. Der Rotor wird mit einer Umfangsgeschwindigkeit von 15 bis 65 m/s betrieben. Bei der alternativen Zerkleinerung des Aufgabeguts mittels Hammermühle ist diese mit einem Siebrost mit Spaltweiten von 20 bis 100 mm und mit einem Rotor, auf dem die Zerkleinerungswerkzeuge beweglich gelagert sind, ausgerüstet. Die Rotorumfangsgeschwindigkeit beträgt 20 bis 70 m/s. Von dem aus der Prall- bzw. Hammermühle kommenden Mahlgut wird ferromagnetisches Metall mit einem Überbandmagneten (3) ausgehoben und einem Sammelbehälter (4) zugeführt. Das übrige Mahlgut wird einer Siebvorrichtung (5) mit in Reihen angeordneten und einseitig gehaltenen, auf mehreren Ebenen montierten Siebstäben zugeführt. Mit Hilfe dieser Siebvorrichtung wird Grobgut von Feingut klassiert. Das Grobgut wird der Prall- bzw. Hammermühle über Fördermittel (6) erneut zugeführt. Das Grobgut beinhaltet Gummi sowie zähe Polymerstücke. Diese Polymerstücke werden durch die Kreislaufführung in der Prall- bzw. Hammermühle weiter zerkleinert. Die Stückgröße des Gummis wird nicht weiter reduziert. Das Gummi reichert sich im Kreislauf an und wird ausgeschleust und dem Behälter (7) zugeführt. Das Feingut wird mittels eines Linearschwingsiebs oder eines Taumelsiebs (8) in die Fraktionen Grobgut II, Feingut II sowie Feinstkorn klassiert. Das Feinstkorn mit einer Korngröße von < 1,25 mm wird dem Behälter (9) zugeführt. Das Feingut II mit einem Kornspektrum von 8 bis 1,25 mm wird einem Luftherd (10) zugeführt. Dort wird Schwergut (z.B. Fe-/NE-Metalle) aus den Polymeren aussortiert und dem Behälter (11) zugeführt. Gleichzeitig wird durch eine Absaugvorrichtung des Luftherds Kunststoffeinstkorn mit einer Korngröße von < ca. 1 mm gewonnen und dem Behälter (12) zugeführt. Das übrige Leichtgut wird dem Behälter (13) zugeführt. Es stellt ein Produkt der selektiven Zerkleinerung dar und kann als ein Ausgangsprodukt zur Herstellung neuer Polymergüter verwendet werden. Es besteht zu ca. 90 % aus dem Polymer PMMA. Das Grobgut II besitzt als Zwischenprodukt für Anwendungen ebenfalls einen ausreichenden Wertstoffgehalt von über 60 % ABS und kann nach weiterer Aufbereitung als Ausgangsprodukt zur Herstellung neuer Polymergüter verwendet werden. Dazu werden mit Hilfe eines Luftherds Kunststoffeinstkorn und Schwergut aussortiert und die Korngröße wird mit Hilfe einer Schneidemühle auf kleiner 8 mm verringert werden (nicht in der Zeichnung dargestellt). Für bestimmte Anwendungen wird der Wertstoffgehalt vom Grobgut II erhöht. Dazu wird das Grobgut II zur Nachzerkleinerung einer Prallmühle (14) zugeführt. Diese ist entsprechend der Prallmühle (2) aufgebaut und wird mit einer Rotorumfangsgeschwindigkeit von 40 bis 80 m/s sowie Abständen zwischen Schlagleisten und Prallplatten von 10 bis 30 mm betrieben. Aus dem nachzerkleinerten Grobgut II wird mit einem Überbandmagneten (15) ferromagnetisches Metall ausgehoben und einem Sammelbehälter (16) zugeführt. Das nachzerkleinerte Gut wird einem Spannwellensieb (17) zugeführt und wird dort in die Fraktionen Grobgut III, Feinstgut II und Mittelgut klassiert. Das Grobgut III mit einer Korngröße > ca. 80 bis 100 mm gelangt über eine Transportvorrichtung (18) erneut zur Prallmühle (14) und wird weiter zerkleinert. Das Feinstgut II mit einer Korngröße < ca. 1 mm wird einem Behälter (19) zugeführt. Das Mittelgut mit einem Kornspektrum von ca. 1 bis 80 mm wird einem Luftherd (20) zugeführt und von Schwergut befreit. Das Schwergut wird dem Behälter (21) zugeführt. Zusätzlich wird durch ein Gebläse des Luftherds Feinstkorn mit einer Korngröße von < ca. 1 mm abgesaugt und dem Behälter (22) zugeführt. Das Luftherdleichtgut wird einer Naßschneidemühle (23) zugeführt und auf eine Korngröße < 8 mm zerkleinert. Das aus der Naßschneidemühle (23) kommende feuchte Mahlgut wird einer Schwimm-Sink-Anlage (24) zugeführt, worin in Wasser aufschwimmende Bestandteile des Mahlguts, insbesondere Gummi, abgetrennt und dem Behälter (25) zugeführt werden. Das absinkende Mahlgut wird einer Zentrifuge (26) zugeführt und mechanisch getrocknet. Als Produkt wird ein trockenes Mahlgut mit einer Korngröße von 1 bis 8 mm und mit einem ABS-Polymergehalt von ca. 90 % gewonnen, das dem Behälter (27) zugeführt wird.

Mit diesem Verfahren der selektiven Zerkleinerung kann ein Wertstoffausbringen von ca. 95 % erzielt werden. Die Polymere ABS und PMMA können dabei in getrennte Fraktionen mit einem Werkstoffgehalt von ca. 90 % gewonnen werden. Diese Fraktionen können als Ausgangsprodukt zur weiteren Trennung oder zur Compoundierung neuer Polymerprodukte verwendet werden.

Mit Hilfe des erfindungsgemäßen Verfahrens können unter anderem ebenso Computertastaturen, Telefon- und Hausgeräte in einer Anlage aufbereitet werden, die der im Ausführungsbeispiel beschriebenen Anlage sehr ähnlich ist. Dabei können zum Beispiel die Polymere Polyvinylchlorid (PVC) und Polybutylenenterephtalat (PBT) von Computertastaturen getrennt werden. Bei den Telefon- und Hausgeräten können ABS von PS und PC, von Polyethylen (PE) sowie von Polypropylen (PP) getrennt werden.

## Patentansprüche

1. Verfahren zur Aufbereitung von Formkörpern aus unterschiedlichen Polymeren, dadurch gekennzeichnet, daß die Formkörper durch eine Prall- und/oder Schlagbeanspruchung bei Normaltemperatur zerkleinert oder zerkleinert und dabei aufgeschlossen werden und daß die Partikeln nach der Zerkleinerung entsprechend ihrer Größe und/oder Form durch ein Klassierverfahren getrennt werden.

2. Verfahren nach Anspruch 1, dadurch gekennzeichnet, daß die Zerkleinerung in einer Prallmühle oder Hammermühle erfolgt.

3. Verfahren nach Anspruch 1 oder 2, dadurch gekennzeichnet, daß nach der Zerkleinerung vor der Trennung durch ein Klassierverfahren eine Magnetabscheidung und eine Siebung mit einem Stangensieb oder einem Spannwellensieb erfolgt, wobei das mit Hilfe der zusätzlichen Siebvorrichtung abgetrennte Grobgut der Prallmühle oder Hammermühle erneut zugeführt wird.

4. Verfahren nach einem der Ansprüche 1 bis 3, dadurch gekennzeichnet, daß die Trennung mit einem Siebverfahren erfolgt.

5. Verfahren nach einem der Ansprüche 1 bis 4, dadurch gekennzeichnet, daß durch das Klassierverfahren eine gröbere Fraktion und eine feinere Fraktion gewonnen werden, wobei zumindest die feinere Fraktion eine für die Weiterverarbeitung geeignete Korngröße aufweist.

6. Verfahren nach Anspruch 5, dadurch gekennzeichnet, daß der Schnitt zwischen gröberer und feinerer Fraktion im Bereich zwischen 1 bis 10 mm liegt.

7. Verfahren nach einem der Ansprüche 1 bis 6, dadurch gekennzeichnet, daß nach der Trennung eine trockene Herdsortierung oder eine Wirbelstromsortierung erfolgt.

8. Verfahren nach einem der Ansprüche 1 bis 7, dadurch gekennzeichnet, daß die Partikeln nach der Trennung einer nassen Dichte-Sortierung oder einer elektrostatischen Scheidung unterzogen werden.

9. Verfahren nach einem der Ansprüche 5 bis 8, dadurch gekennzeichnet, daß die Partikeln der gröberen Fraktion durch eine Prall- und/oder Schlagbeanspruchung bei Normaltemperatur weiter zerkleinert oder weiter zerkleinert und dabei aufgeschlossen werden und daß die Partikeln nach der weiteren Zerkleinerung entsprechend ihrer Größe und/oder Form durch ein Klassierverfahren getrennt werden.

10. Verfahren nach Anspruch 9, dadurch gekennzeichnet, daß die weitere Zerkleinerung in einer Prallmühle oder Hammermühle erfolgt.

11. Verfahren nach Anspruch 9 oder 10, dadurch gekennzeichnet, daß die Trennung nach der weiteren Zerkleinerung mit einem Siebverfahren erfolgt und daß dabei eine gröbere und eine feinere Fraktion gewonnen werden, wobei die gröbere Fraktion der Prallmühle oder Hammermühle erneut zugeführt wird.

12. Verfahren nach Anspruch 11, dadurch gekennzeichnet, daß der Schnitt zwischen gröberer und feinerer Fraktion der weiter zerkleinerten Partikeln im Bereich zwischen 50 bis 200 mm liegt.

13. Verfahren nach einem der Ansprüche 9 bis 12, dadurch gekennzeichnet, daß nach der weiteren Zerkleinerung vor der Trennung eine Magnetabscheidung erfolgt.

14. Verfahren nach einem der Ansprüche 9 bis 13, dadurch gekennzeichnet, daß nach der Trennung eine trockene Herdsortierung oder eine Wirbelstromsortierung erfolgt.

15. Verfahren nach einem der Ansprüche 11 bis 14, dadurch gekennzeichnet, daß die Partikeln der feineren Fraktion in einer Naßschneidemühle weiter zerkleinert werden, bis die Partikeln eine für die Weiterverarbeitung geeignete Korngröße aufweisen.

16. Verfahren nach einem der Ansprüche 11 bis 15, dadurch gekennzeichnet, daß die Partikeln der feineren Fraktion einer Schwimm-Sink-Anlage zugeführt werden, worin in Wasser aufschwimmende Bestandteile abgetrennt werden.

17. Verfahren nach Anspruch 16, dadurch gekennzeichnet, daß die absinkenden Partikeln der feineren Fraktion getrocknet werden.

18. Verfahren nach einem der Ansprüche 11 bis 17, dadurch gekennzeichnet, daß die Partikeln der feineren Fraktion einer nassen Dichte-Sortierung oder einer elektrostatischen Scheidung unterzogen werden.

19. Vorrichtung zur Durchführung des Verfahrens nach Anspruch 1 oder 2, bestehend aus einer Prallmühle oder Hammermühle (2) und einem Linearschwingsieb oder Taumelsieb (8), die hintereinander angeordnet sind und wodurch eine gröbere und eine feinere Fraktion gewonnen werden.

20. Vorrichtung nach Anspruch 19, bestehend aus einer zusätzlichen Magnetabscheidevorrichtung (3) und einer zusätzlichen Siebvorrichtung mit in Reihen angeordneten und einseitig gehaltenen Siebstäben oder einem Spannwellensieb (5), die zwischen der Prallmühle oder Hammermühle (2) und dem Linearschwingsieb oder Taumelsieb (8) angeordnet sind, wobei das mit Hilfe der zusätzlichen Siebvorrichtung oder dem Spannwellensieb (5) abgetrennte Grobgut der Prallmühle oder Hammermühle (2) mit einer Transportvorrichtung (6) erneut zugeführt wird.

21. Vorrichtung nach Anspruch 19 oder 20, die einen zusätzlichen Luftherd (10) hat, der nach dem Linearschwingsieb oder Taumelsieb (8) angeordnet ist und worin die feinere Fraktion aufgegeben wird.

22. Vorrichtung nach einem der Ansprüche 19 bis 21, bestehend aus einer weiteren Prallmühle oder Hammermühle (13) und einem weiteren Linearschwingsieb, Taumelsieb oder Spannwellensieb (17), die hintereinander angeordnet sind und worin die gröbere Fraktion aufgegebnen wird.

23. Vorrichtung nach Anspruch 22, die eine zusätzliche Magnetabscheidevorrichtung (15) hat, die zwischen der Prallmühle oder Hammermühle (13) und dem Linearschwingsieb, Taumelsieb oder Spannwellensieb (17) angeordnet ist, wobei das mit Hilfe des Linearschwingsiebs, Taumelsiebs oder Spannwellensiebs (17) abgetrennte Grobgut der Prallmühle oder Hammermühle (13) mit einer Transportvorrichtung (18) erneut zugeführt wird.

24. Vorrichtung nach Anspruch 22 oder 23, die einen zusätzlichen Luftherd (20) und eine Naßschneidemühle (23) hat, die hintereinander geschaltet sind und die nach dem Linearschwingsieb, Taumelsieb oder Spannwellensieb (17) angeordnet sind.

25. Vorrichtung nach Anspruch 23 oder 24, die eine zusätzliche Schwimm-Sink-Anlage (24) und eine Zentrifuge (26) hat, die hintereinander geschaltet sind und die nach dem Linearschwingsieb, Taumelsieb oder Spannwellensieb (17) oder nach der Naßschneidemühle (23) angeordnet sind.
